# EUROPEAN PATENT SPECIFICATION

(11) **EP 4 397 514 B1**
(45) Date of publication and mention of the grant of the patent: **24.06.2026**
(21) Application number: 24382014.9
(22) Date of filing: 09.01.2024
(51) Int. Cl.: B60H 1/34

(54) **AIR DIFFUSER FOR AIR CONDITIONING A VEHICLE**
LUFTAUSSTRÖMER ZUR KLIMATISIERUNG EINES FAHRZEUGS
DIFFUSEUR D'AIR POUR LA CLIMATISATION D'UN VÉHICULE

(30) Priority: 09.01.2023 ES 202330006
(43) Date of publication of application: 10.07.2024
(73) Proprietor: Seat, S.A., 08760 Martorell - Barcelona (ES)
(72) Inventor: JULIO TEJERO, Raul, 08760 Martorell (ES)
(74) Representative: Elzaburu S.L.P.

(56) References cited:
- CN-A- 114 590 110
- DE-U1- 202014 104 226
- US-A1- 2019 301 767

## Description

### Object of the invention

The object of the present invention is an air diffuser for air conditioning a vehicle, that allows the air conditioning flow to be directed with a very low pressure drop.

Due to the low pressure drop obtained by the air diffuser of the invention, the capacity to direct the air flow in the desired direction towards the interior of the vehicle cabin is increased, and it allows the air flow to be better concentrated in order to increase its speed and ensure that it reaches any area inside the vehicle cabin.

The air diffuser for air conditioning a vehicle, object of the present invention, has special application in the scope of the industry dedicated to the design and manufacture of motor vehicles.

### Background of the invention and technical problem to be solved

Currently, most motor vehicles incorporate air diffusers for air conditioning that incorporate a series of slats arranged in a vertical stack, said slats separated from each other by a certain distance to allow air to pass between them, in order to direct the air outlet flow in a vertical direction. These slats are arranged in planes parallel to each other and are mechanically linked so that they all always remain parallel to each other. The inclination of said slats can be adjusted by adjustment means on the front panel or dashboard of the vehicle in order to deflect or direct the air flow and aim it towards the top, the centre or the bottom of the vehicle cabin. These slats constitute a type of grille that gets in the way of the air outlet and causes a considerable pressure drop in the outlet air flow.

The pressure drop in the air flow reduces the effectiveness of directing the air flow, preventing said air flow from being projected in a concentrated manner, thereby reducing its speed and its capacity to reach far areas of the interior of the vehicle cabin.

In the state of the art, document DE 102016122142 is known, which discloses a diffuser for air conditioning a vehicle that reduces the number of slats arranged at the air flow outlet to three slats, wherein there is a single slat that supports the other two slats not seen from inside the vehicle in the direction of the air flow in the vertical plane. Thus, in the diffuser described herein, the direction of the air flow in the vertical plane is achieved through the combined effect of the slat located in the air flow outlet opening and two sets of inner slats (which are in turn made up of different sections, two at the top and two at the bottom of the duct) that can be oriented to create a bend in the air outlet duct, in such a way that they can help to aim most of the air flow towards the diffuser outlet, in the desired direction.

Although the diffuser described in the aforementioned document allows the number of slats at the outlet of said diffuser to be reduced, it is not capable of completely dispensing with the slats at the outlet, since the inner slats cannot completely direct the air flow in the desired direction. In the diffuser disclosed in the previous document, there is still a significant pressure drop, both in the central slat located in the outlet opening and inside the duct itself, since the inner slats create a bend with an abrupt geometry, especially in the positions of maximum air directing, wherein a significant pressure drop also occurs in the air flow, which results in the reduced speed of the outlet flow, a limited capacity for directing the flow, and wherein the air flow does not reach the furthest areas of the vehicle cabin.

Document CN 114590110 A is known from the prior art. This document discloses a blade assembly and an automobile air conditioner air outlet using the same.

Document DE 202014104226 U1 is further known from the prior art. This document discloses an air vent comprising at least two air guiding elements arranged substantially parallel to one another.

Document US 2019301767 A1 is also known from the prior art. This document discloses a vaneless ventilation system for conformal outlets.

### Description of the invention

In order to solve the aforementioned drawbacks, in accordance with the present invention there is provided an air diffuser for air conditioning a vehicle, as set out in independent claim 1. Preferred embodiments of the present invention are laid down in the appended dependent claims.

The air diffuser for air conditioning a vehicle, object of the present invention, comprises a casing that defines a channel for the passage of air from an inlet to an outlet of the diffuser.

The diffuser is configured so that the air is directed from the inlet to the outlet and is adapted to be projected as an air flow from the diffuser outlet towards the interior of a vehicle cabin.

Thus, the air inlet opening receives an air flow coming from inner ducts of the vehicle responsible for air conditioning and adapting the air flow to the desired temperature and humidity conditions. For its part, the outlet opening makes it possible to extract the air flow directed inside the diffuser towards the interior of the vehicle cabin.

In the air diffuser for air conditioning a vehicle, object of the present invention, the casing comprises two opposite walls that define a widening and a subsequent narrowing of the air passage channel. It is noted that the air passage channel delimited by the casing may comprise other walls, for example, side walls, which close the air passage channel, so that the air can only escape through the inlet opening and the outlet opening of the diffuser.

The diffuser comprises two directing elements inside the casing, said elements being configured to delimit the passage of air through the diffuser interior, each of the directing elements being arranged adjacent to a respective opposite wall of the casing, where said directing elements can be displaced by drive means between a first position, where the air flow is directed along a first directing plane in a first direction, and a second position, where the air flow is directed along said first directing plane in a second direction, opposite to the first direction. Adjacent arrangement of each of the directing elements to a respective wall of the diffuser should be understood to mean that a first directing element is arranged close to one of the walls and the second directing element is arranged close to the wall opposite the wall of the first directing element. It should be noted that the directing elements are mobile, and therefore can be displaced. However, in all displacement positions the first directing element is arranged closer to one of the walls than the second directing element, and the second directing element is arranged closer to the opposite wall than the first directing element.

Each mobile directing element comprises a plurality of slats mechanically linked to each other and arranged consecutively with respect to the adjacent slats of the respective directing element, so that the operation of the drive means causes the slats arranged in an intermediate section of each directing element to be displaced towards one wall or the other wall of the casing, redirecting the air flow at the diffuser outlet in a direction opposite to the direction of displacement of said slats arranged in the intermediate section of each directing element.

In the present invention, consecutive slat arrangement is understood to mean the arrangement of slats one after the other in the direction of travel of the air flow inside the cavity, in other words, in the direction from the inlet opening to the outlet opening. Thus, by way of example, the slats may comprise a prism structure having a rectangular base, with a height of the prism being substantially equal to the distance between the side wall and the opposite side wall of the cavity.

Thus, said directing elements respectively comprise intermediate sections capable of being displaced along the first directing plane (for example, along a vertical plane perpendicular to the rolling plane of the vehicle), by the drive means between the opposite walls of the casing (for example, an upper wall and a lower wall of the casing), so that the operation of the drive means causes the intermediate section of the mobile directing elements to be displaced.

By way of example, in the first position of the directing elements, in other words, in the position in which both directing elements are displaced towards the upper wall, the channel of air emitted through the outlet opening is directed downwards, taking the rolling plane of the vehicle as a reference. On the contrary, in the second position of the directing elements, in other words, in the position in which both directing elements are displaced towards the lower wall, the channel of air emitted through the outlet opening is directed upwards, taking the rolling plane of the vehicle as a reference. It is noted that there are a plurality of intermediate positions of the directing elements between the first position and the second position of the directing elements.

Using the diffuser described above, it is possible to direct the air flow in the first directing plane, without the need for slats at the diffuser outlet that are seen by a user positioned inside the vehicle cabin, thus achieving better efficiency in directing due to the lower pressure drop of the air flow in the diffuser, something which is especially achieved by the non-existence of air flow impact with the rear portion of the slats, or portion of the slats closest to the inlet opening. This structure, where the slats act as vertebrae of each directing element and generate an unobstructed channel of air from the inlet opening to the outlet opening, allows the mobile directing element to be displaced effectively.

According to the present invention, each directing element comprises a flexible sheet, wherein inner faces of the flexible sheets delimit the air passage channel of the diffuser and each slat is adhered to an outer face of the respective flexible sheet and is arranged on the side of the respective flexible sheet oriented towards the wall closest to the respective flexible sheet. Therefore, the two flexible sheets of each directing element are what limit the air passage channel, where each group of adjacent slats is adhered to the side of the flexible sheet that does not delimit the air passage channel. This configuration makes it possible to maintain some flexibility of each mobile directing element. Likewise, given that the slats are adhered to the flexible sheet, it is not necessary for the ends of the slats to be articulated to each other, since the slats are linked to each other by the flexible sheet that keeps them joined and with a constant separation between the faces of the slats adhered to the flexible sheet.

The slats can be adhered to the flexible sheet, for example, through a process of injecting flexible plastic onto the set of rigid plastic slats.

According to a preferred embodiment of the present invention, each of the plurality of slats is adhered to its respective flexible sheet separated from the adjacent slat, so that a relative rotational movement is allowed between consecutive slats. Thus, the adhesion of each of the slats to the flexible sheet allows the consecutive arrangement of the slats to be maintained but, at the same time, the separation between them and the flexible properties of the sheet allow there to be relative rotation between consecutive slats.

According to a particular detail of the previous embodiment, the separation distance is defined such that contact occurs between consecutive slats in the event of relative rotation between consecutive slats of a predetermined value, limiting the relative rotation between consecutive slats. This therefore allows each directing element to generate geometries such as, for example, a wave or half-sinusoid. The separation distance between consecutive slats can be constant or variable, and the maximum relative rotation between consecutive slats can be adjusted according to the position occupied by said slats in the respective directing element.

According to a variant of the present invention, one of the directing elements makes contact with one wall, when the directing elements are in the first position, and one of the directing elements makes contact with the other wall, when the directing elements are in the second position. Thus, both the geometry of the directing element and its position inside the cavity are determined, at least in its maximum displacement position (first position or second position), by the contact between the directing element and the respective wall, thus copying the widening and subsequent narrowing that defines the cavity.

Preferably, among the plurality of slats, each directing element comprises a first end slat arranged close to the diffuser outlet, where each of said first end slats comprises a respective pivot linked to two fixed points at the diffuser outlet. This allows the ends of the mobile directing elements located in correspondence with the diffuser outlet to always remain in said position and to not separate from the diffuser outlet when the drive means cause the intermediate section of the mobile directing elements to be displaced. Therefore, the end slats of each directing element have only one degree of freedom with respect to the casing, which is a relative rotation around the axis defined by the respective pivot, said axis of rotation being substantially parallel to the plane defined by the outlet opening and to the rolling plane of the vehicle.

Also preferably, among the plurality of slats, each directing element comprises second end slats located close to the diffuser inlet, where each of said second end slats comprise respective pivots that are inserted into a guide configured to allow said pivots to be displaced only inside said guide. This allows the mobile directing elements to be displaced in a controlled and reversible manner by allowing the slats of each mobile directing element located close to the diffuser inlet to be displaced in a restricted manner.

According to one particular embodiment of the previous embodiment, each guide comprises a longitudinal geometry that extends along a direction perpendicular to the plane defined by the outlet opening of the diffuser, such that said guides define a movement of the respective second end slats along a longitudinal displacement towards or away from the outlet opening of the diffuser, and where each guide comprises a funnel geometry at its end closest to the outlet opening, such that each slat of the second end slats that is closest to the intermediate section of its respective directing element is additionally displaced towards one wall or the other wall of the casing. The particular geometry of the guide, which is arranged on each of the side walls, limits the displacement of the end slats. Said displacement is mainly longitudinal, but allows the slat of the second end slats that is closest to the intermediate area to carry out a displacement towards the opposite walls, in other words, it can carry out an upward and downward displacement, in addition to the longitudinal displacement towards or away from the outlet opening of the diffuser.

According to a preferred embodiment of the present invention, among the plurality of slats arranged in the intermediate section of its respective directing element, one of said intermediate slats is connected by a pivot to the drive means. This is one way of linking the drive means to the intermediate section of the mobile directing elements, allowing said intermediate sections to be displaced in the first directing plane with a pivoting or articulated link.

According to one possible embodiment of the invention, the directing elements remain parallel to each other during their displacement between the first position and the second position. In greater detail, the directing elements are identical to each other, such that each directing element is made up of the same number of slats and an identical flexible sheet. Consequently, each of the slats that make up the directing element is parallel to the facing slat of the other directing element. In this way, it is possible to generate an air flow channel having a constant section, without narrowing or widening said channel and without obstacles. In this way, an optimal load flow is favoured that minimises losses, generation of turbulence and other aspects inside the diffuser.

According to a particular embodiment, the intermediate slat connected by the pivot to the drive means, of each directing element is arranged substantially perpendicular to the plane defined by the outlet opening of the diffuser in all displacement positions between the first position and the second position.

According to a particular embodiment, the directing elements define an air passage channel having a constant section along said directing elements. Furthermore, due to the constructive structure of the directing element explained above, no abrupt changes are generated in the directing of the air flow that runs through the air passage channel having a constant section, such that the directing capacity of the diffuser is optimised.

According to one possible embodiment of the invention, the drive means comprise a lever located close to the diffuser outlet, where the lever is engaged with a gearbox that comprises at least one gear wheel, and where the gearbox is engaged with cams connected respectively to the pivots of the slats of the intermediate sections of the respective directing elements, the cams being configured to displace, in a manner equidistant from each other in all displacement positions between the first position and the second position, the intermediate section of the directing elements towards one wall or the other wall of the casing when the lever is operated by a user of the vehicle. This configuration allows the air to be directed in a simple way by the user (for example, the driver or co-pilot of the vehicle) by simply operating the lever located in correspondence with the air outlet of the diffuser. According to a preferred embodiment, the lever is located without interfering with the air outlet opening of the diffuser, being, for example, close to the perimeter ends that define said air outlet opening of the diffuser.

According to one possible embodiment of the invention, the air diffuser for air conditioning a vehicle comprises at least one fin inside the casing configured to direct the air flow along a second directing plane (for example, a horizontal plane) perpendicular to the first directing plane, allowing the air to be directed to the left or right inside the vehicle cabin, for example, towards the driver of the vehicle or towards the passenger in the front seat of the vehicle.

This at least one fin can be located, for example, in correspondence with the intermediate section of the mobile directing elements, so that it is displaced integrally with said intermediate section of the directing elements between the first position and the second position. This fin can also be located, for example, in correspondence with a section of the directing elements that is arranged close to the air inlet in the diffuser, and it mechanically detaches from the movement of said directing elements, performing a pivoting movement with respect to the diffuser casing.

### Brief description of the figures

The following figures have been included as part of the explanation of at least one embodiment of the invention.
Figure 1 shows a schematic view, in a side section, of a possible embodiment of the air diffuser for air conditioning a vehicle, object of the present invention, wherein the intermediate section of the mobile directing elements is displaced as far as possible towards the top of the casing, in a first displacement position of the directing elements.
Figure 2 shows a schematic view of the air diffuser of Figure 1, wherein the intermediate section of the mobile directing elements is displaced with a medium-high deviation towards the top of the casing.
Figure 3 shows a schematic view of the air diffuser of Figure 1, wherein the intermediate section of the mobile directing elements is displaced with a medium-low deviation towards the top of the casing.
Figure 4 shows a schematic view of the air diffuser of Figure 1, wherein the intermediate section of the mobile directing elements is at an equal distance from the top and from the bottom of the casing, in an intermediate position between the first position and the second displacement position of the directing elements.
Figure 5 shows a schematic view of the air diffuser of Figure 1, wherein the intermediate section of the mobile directing elements is displaced with a medium-low deviation towards the bottom of the casing.
Figure 6 shows a schematic view of the air diffuser of Figure 1, wherein the intermediate section of the mobile directing elements is displaced with a medium-high deviation towards the bottom of the casing.
Figure 7 shows a schematic view of the air diffuser of Figure 1, wherein the intermediate section of the mobile directing elements is displaced as far as possible towards the bottom of the casing, in a second displacement position of the directing elements.
Figure 8 shows a schematic view of the air diffuser of Figure 1, wherein a fin has been incorporated to direct the air flow to the diffuser outlet along a horizontal plane.

### Detailed description

The present invention relates, as mentioned above, to an air diffuser for air conditioning a vehicle.

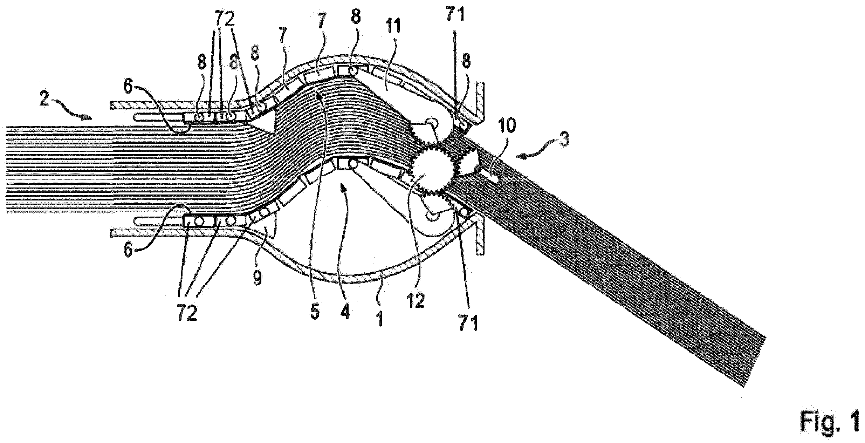

Figure 1 shows a possible embodiment of the air diffuser for air conditioning a vehicle, object of the present invention. Figure 1 shows a section of the diffuser along a vertical plane. The air diffuser comprises a casing (1) that defines a channel for the circulation of an air flow, from a front or forward position of the vehicle to a rear or backward direction of the vehicle, along the direction of travel of the vehicle.

The inlet (2) of air into the channel defined by the casing (1) corresponds to the front position of the diffuser, and the outlet (3) of the air flow from the channel defined by the casing (1) corresponds to the rear position of the diffuser, where the outlet opening (3) extracts the air flow towards the interior of the vehicle cabin.

As shown in Figure 1, the casing (1) (and the channel defined by the casing (1)) has a section with a bulb-shaped geometry, comprising an intermediate portion wider than the air inlet and outlet of the diffuser; thus, the upper wall (21) and the lower wall (22) define a widening of the cavity and a subsequent narrowing of said cavity, where the outlet (3) of the air flow is arranged in the final area of said narrowing of the cavity. In addition to the upper and lower walls (21, 22), the cavity is defined by two side walls, limiting the air circulation area inside the cavity from the inlet opening (2) to the outlet opening (3).

Inside the casing (1), the air does not flow at a given moment throughout the section of the channel defined by the casing (1), but rather the air flow is confined, at any given moment, by at least one top mobile directing element (4) and by at least one bottom mobile directing element (5), which together with said side walls define the air flow channel.

The top mobile directing element (4) and the bottom mobile directing element (5) are provided with drive means that, together with other aspects and components that will be explained later, allow both directing elements (4, 5) to remain parallel to each other in all displacement positions, and allow the intermediate sections of both directing elements (4, 5) to be displaced vertically, in such a way that, in said first position, both directing elements (4, 5) define a curved path for the air flow, from the inlet (2) to the outlet (3) of the diffuser that directs the air flow. The intermediate section of the top mobile directing element (4) or of the bottom mobile directing element (5) is understood to be a section located at approximately the same distance from the inlet (2) and from the outlet (3) of the diffuser.

Thus, when the drive means of the directing elements (4, 5) displace the intermediate section of the directing elements towards the top of the channel defined by the diffuser casing (1). In said first position, the directing elements (4, 5) are arranged in a positive half-sinusoid or wave geometry, such that the air flow runs from the diffuser inlet (2) along an upward and then downward curve, the air flow leaving the diffuser outlet (3) in a direction towards the bottom of the interior of the vehicle cabin.

Figure 1 represents this situation in which the drive means of the directing elements (4, 5) cause the intermediate section of said directing elements (4, 5) to be displaced until it makes contact with the upper wall (21) of the casing (1).

On the contrary, when the drive means of the directing elements (4, 5) displace the intermediate section of the directing elements (4, 5) towards the bottom of the channel defined by the diffuser casing (1). In said second position, the directing elements (4, 5) are arranged in a negative half-sinusoid or inverted wave geometry, such that the air flow runs from the diffuser inlet (2) along a downward and then upward curve, the air flow leaving the diffuser outlet (3) in a direction towards the top of the interior of the vehicle cabin.

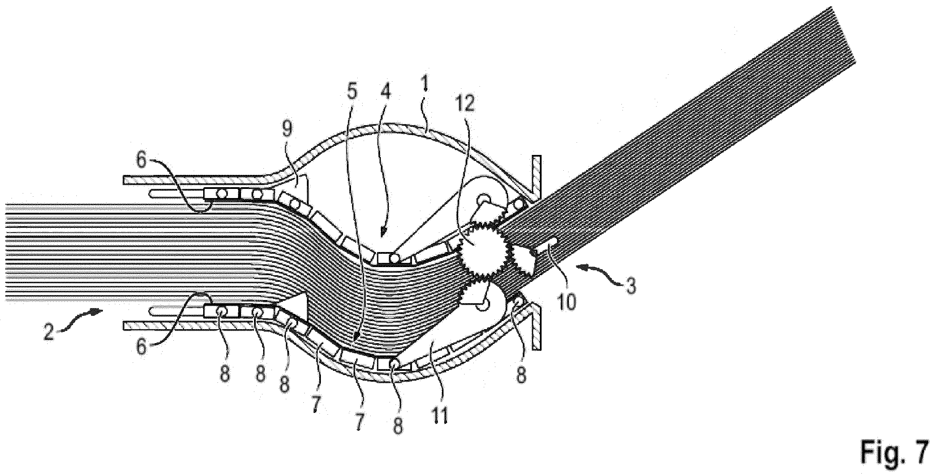

Figure 7 represents this situation in which the drive means of the directing elements (4, 5) cause the intermediate section of said directing elements (4, 5) to be displaced until it makes contact with the lower wall (22) of the channel defined by the casing (1).

The drive means of the directing elements (4, 5) allow the intermediate section of the directing elements (4, 5) to be displaced according to a plurality of intermediate positions between the upper wall (21) and the lower wall (22) of the channel defined by the casing (1).

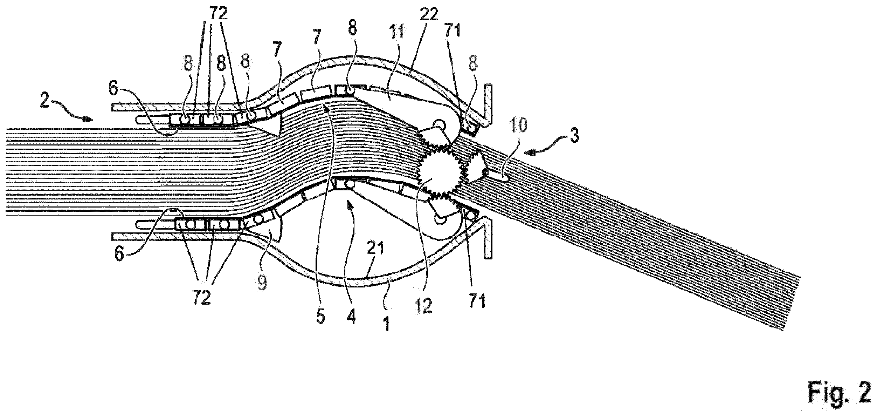

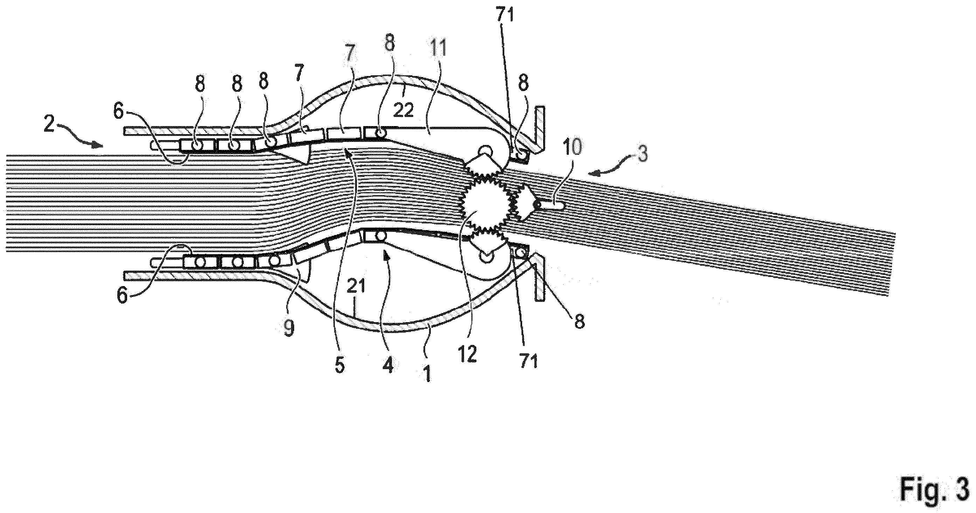

Thus, in Figure 2 and Figure 3, two intermediate positions are respectively represented in which the drive means of the directing elements (4, 5) cause the intermediate section of said directing elements (4, 5) to be displaced towards the top of the channel defined by the casing (1), but without coming in contact with the top of the channel defined by the casing (1). Here the air flow is directed towards the bottom of the interior of the vehicle cabin, with a medium-high deviation (Figure 2) or medium-low deviation (Figure 3).

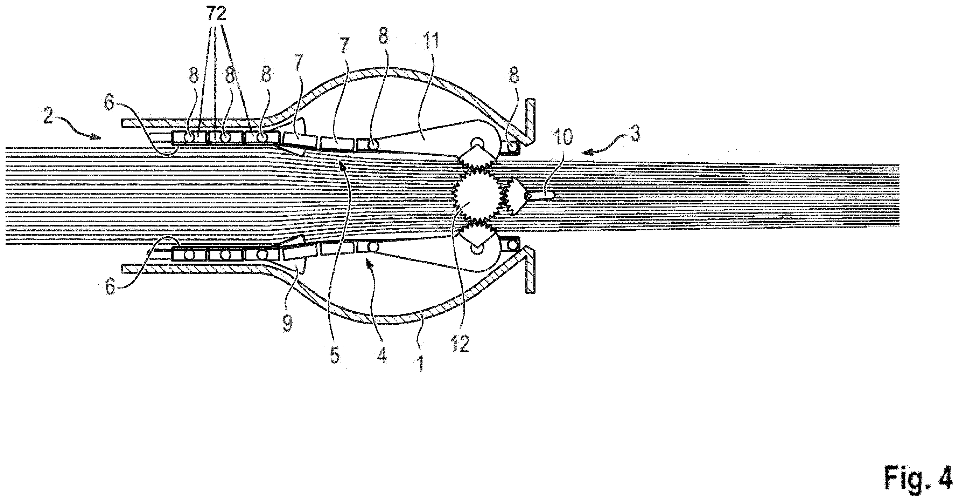

Figure 4 represents the air flow situation without vertical deviation, in other words, the situation in which the drive means of the directing elements (4, 5) maintain the intermediate section of the directing elements (4, 5) at an equal distance from the top and from the bottom of the channel defined by the casing (1).

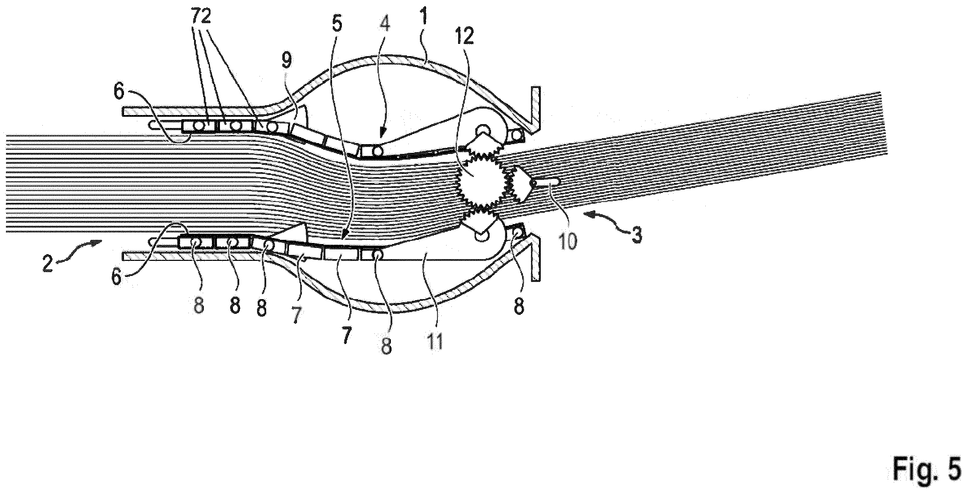

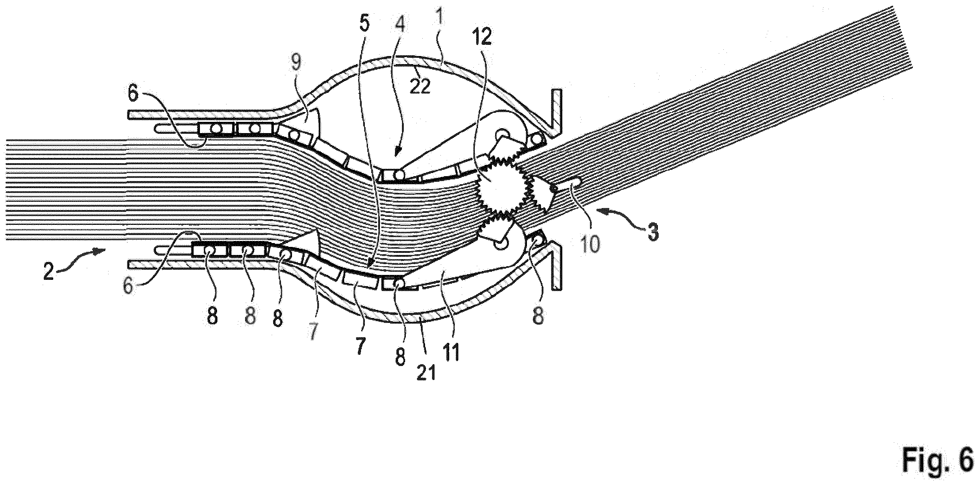

In Figure 5 and Figure 6, two intermediate positions are respectively represented in which the drive means of the directing elements (4, 5) cause the intermediate section of said directing elements (4, 5) to be displaced towards the bottom of the channel defined by the casing (1), but without coming in contact with the bottom of the channel defined by the casing (1). Here the air flow is directed towards the top of the interior of the vehicle cabin, with a medium-low deviation (Figure 5) or medium-high deviation (Figure 6).

As seen in any of the figures and according to the present invention, each of the directing elements (4, 5) comprises a flexible sheet (6) (that is preferably impermeable to the passage of air) and a structure of vertebrae-like slats (7). These slats (7) give consistency to the corresponding mobile directing element (4, 5) and are adhered to the flexible sheet (6), preferably by means of an adhesive. The flexible sheet (6) comprised by each of the directing elements (4, 5) comprises an inner face, which delimits the air flow channel, and an outer face, which faces a respective wall (21, 22). The slats (7) are arranged adhered to said outer face, providing rigidity to said directing elements (4, 5).

Preferably, the slats (7) of each mobile directing element (4, 5) are arranged equidistant from each other, there being a sufficient separation space between slats (7) so that the slats (7) do not collide with each other and/or do not prevent the corresponding mobile directing element (4, 5) from displacing when each mobile directing element (4, 5) curves or when a relative rotation occurs between adjacent slats (7) due to the displacement of its intermediate section by the drive means.

Preferably, the directing elements (4, 5) are manufactured by means of a 2K injection of a flexible plastic material on the slats (7) made of rigid plastic material.

Each of the directing elements (4, 5) comprises a plurality of slats (7) arranged consecutively one after the other and linked to each other by means of the flexible sheet (6). Both said slats (7) and the flexible sheet (6) extend from side end to side end, in other words, making contact or practically making contact with the side walls that define the cavity. In this way, air leaks that reduce the efficiency of the diffuser are avoided. As an example, said slats (7) comprise a geometry in the shape of a rectangular prism, which may be another type of prism base, such as an oval geometry base.

In each of the directing elements (4, 5), there are one or more slats (7), corresponding to the intermediate section, that are connected (for example, by means of a pivot (8)) to the drive means that allow the intermediate section of the directing elements (4, 5) to be vertically displaced inside the diffuser casing (1). When the drive means vertically displace these slats (7) in the intermediate section, these slats (7) of the intermediate section drag the flexible sheet, which in turn pulls the rest of the slats (7) of the directing elements (4, 5).

Preferably, for the directing elements (4, 5) to be vertically displaced correctly, each mobile directing element (4, 5) must comprise a pivot (8) (located on one of its slats (7)) linked to a fixed point of the diffuser casing (1), for example in correspondence with the diffuser outlet (3). These first end slats (71) are linked to the casing (1) by means of a pivot (8) that allows said first end slats (71) to be displaced with respect to the casing (1) according to a single degree of freedom: a rotation with respect to one of the ends of said first end slats (71). Thus, when the drive means are operated, the first end slats (71) cannot be displaced along a longitudinal displacement, moving away from the diffuser outlet (3).

Likewise, preferably, each mobile directing element (4, 5) comprises a plurality of pivots (8), respectively located on slats (7) which in turn are located in correspondence with the initial section of each mobile directing element (4, 5) close to the air inlet (2) in the diffuser. These second end slats (72) are linked to the casing (1) by means of a guide (9). The pivots (8) of each mobile directing element (4, 5) are inserted into said guide (9) with an elongated shape, such that the second end slats (72) located in correspondence with the initial section of each mobile directing element (4, 5) close to the air inlet (2) in the diffuser have limited longitudinal displacement towards or away from the inlet opening (2). In this way, it is possible to generate the semi-sinusoidal geometry of each mobile directing element (4, 5).

According to a particular embodiment, the guide (9) comprises a funnel-shaped geometry at the end of said guide (9) closest to the outlet opening (3) of the diffuser. Thus, said second end slats (72) carry out, in addition to the longitudinal displacement along the guide (9), an upward or downward displacement, limited by the contact of the pivots (8) with the ends of the funnel-shaped guide (9).

The drive means of the directing elements (4, 5) may comprise a gun or lever (10) located close to the air outlet (3) of the diffuser, such that the driver or co-pilot of the vehicle can operate said lever (10) to direct the air flow towards the top or towards the bottom of the interior of the vehicle cabin. Said lever (10) has been schematically represented inside the outlet opening (3), but it is preferably located outside said outlet opening (3), for example, in the walls that define said outlet opening (3). This lever (10) engages with a gear wheel (12), which directly or indirectly (for example, through a gear wheel box (12)), engages with cams (11) that displace the intermediate section of the directing elements (4, 5) towards the top or towards the bottom of the channel defined by the casing (1), always keeping the intermediate section of the top mobile directing element (4) and the intermediate section of the bottom mobile directing element (5) at the same distance and, therefore, always keeping both directing elements (4, 5) parallel due to the pivots (8) located on slats (7) in correspondence with the air outlet (3) or with the air inlet (2) of the diffuser.

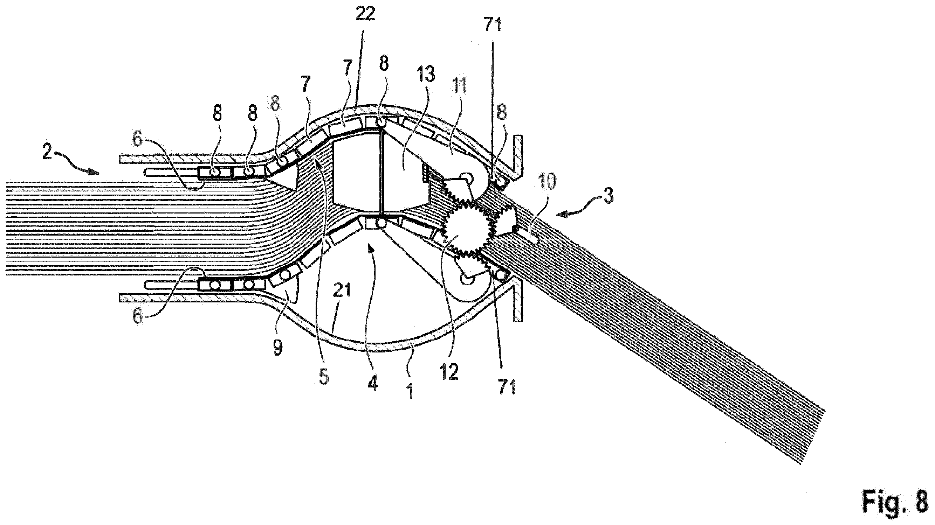

To direct the air flow in the horizontal plane, the diffuser may comprise, as shown in Figure 8, at least one vertical rudder-like fin (13), located inside the casing (1), for example, in correspondence with the intermediate section of the directing elements (4, 5). By using a horizontal directing gun or lever, the driver or co-pilot of the vehicle can direct said fin (13) in one direction or another, thus directing the air flow to the right or left, towards the interior of the vehicle cabin. Said at least one fin (13) is mechanically linked to the slats (7) where the drive means operate, such that they move integrally with the directing elements (4, 5) in their displacement between the first position and the second position.

## Claims

1. An air diffuser for air conditioning a vehicle, said diffuser comprising a casing (1) that defines a channel for the passage of air from an inlet (2) to an outlet (3) of the diffuser, where the diffuser is configured so that the air is directed from the inlet (2) to the outlet (3) and is adapted to be projected as an air flow from the diffuser outlet (3) towards the interior of a vehicle cabin, where the casing (1) comprises two opposite walls (21, 22) that define a widening and a subsequent narrowing of the air passage channel and where the diffuser comprises two directing elements (4, 5) inside the casing (1), said elements (4, 5) being configured to delimit the passage of air through the diffuser interior, each of the directing elements (4, 5) being arranged adjacent to a respective opposite wall (21, 22) of the casing (1), where said directing elements (4, 5) can be displaced by drive means between a first position, where the air flow is directed along a first directing plane in a first direction, and a second position, where the air flow is directed along said first directing plane in a second direction, opposite to the first direction, wherein each directing element (4, 5) comprises a plurality of slats (7) mechanically linked to each other and arranged consecutively with respect to the adjacent slats (7) of the respective directing element (4, 5), so that the operation of the drive means causes the slats (7) arranged in an intermediate section of each directing element (4, 5) to be displaced towards one wall (21) or the other wall (22) of the casing (1), redirecting the air flow at the diffuser outlet (3) in a direction opposite to the direction of displacement of said slats (7) arranged in the intermediate section of each directing element (4, 5), the air diffuser being **characterised in that** each directing element (4, 5) comprises a flexible sheet (6), wherein inner faces of the flexible sheets (6) delimit the air passage channel of the diffuser and each slat (7) is adhered to an outer face of the respective flexible sheet (6) and is arranged on the side of the respective flexible sheet (6) oriented towards the wall (21, 22) closest to the respective flexible sheet (6).

2. The air diffuser for air conditioning a vehicle according to claim 1, **characterised in that** each of the plurality of slats (7) is adhered to its respective flexible sheet (6) separated from the adjacent slat (7), so that a relative rotational movement is allowed between consecutive slats (7).

3. The air diffuser for air conditioning a vehicle according to claim 2, **characterised in that** the separation distance is defined such that contact occurs between consecutive slats (7) in the event of relative rotation between consecutive slats (7) of a predetermined value, limiting the relative rotation between consecutive slats (7).

4. The air diffuser for air conditioning a vehicle according to any of the preceding claims, **characterised in that** one of the directing elements (5) makes contact with one wall (22), when the directing elements (4, 5) are in the first position, and **in that** one of the directing elements (4) makes contact with the other wall (21), when the directing elements (4, 5) are in the second position.

5. The air diffuser for air conditioning a vehicle according to any of the preceding claims, **characterised in that**, among the plurality of slats (7), each directing element (4, 5) comprises a first end slat (71) arranged close to the diffuser outlet (3), where each of said first end slats (71) comprises a respective pivot (8) linked to two fixed points at the diffuser outlet (3).

6. The air diffuser for air conditioning a vehicle according to any of the preceding claims, **characterised in that**, among the plurality of slats (7), each directing element (4, 5) comprises second end slats (72) located close to the diffuser inlet (2), where each of said second end slats (72) comprises respective pivots (8) that are inserted into a guide (9) configured to allow said pivots (8) to be displaced only inside said guide (9).

7. The air diffuser for air conditioning a vehicle according to claim 6, **characterised in that** each guide (9) comprises a longitudinal geometry that extends along a direction perpendicular to the plane defined by the outlet opening (3) of the diffuser, such that said guides (9) define a movement of the respective second end slats (72) along a longitudinal displacement towards or away from the outlet opening (3) of the diffuser, and where each guide (9) comprises a funnel geometry at its end closest to the outlet opening (3), such that each slat (72) of the second end slats (72) that is closest to the intermediate section of its respective directing element (4, 5) is additionally displaced towards one wall (21) or the other wall (22) of the casing (1).

8. The air diffuser for air conditioning a vehicle according to any of the preceding claims, **characterised in that**, among the plurality of slats (7) arranged in the intermediate section of its respective directing element (4, 5), one of said intermediate slats (7) is connected by a pivot (8) to the drive means.

9. The air diffuser for air conditioning a vehicle according to any of the preceding claims, **characterised in that** the directing elements (4, 5) remain parallel to each other during their displacement between the first position and the second position.

10. The air diffuser for air conditioning a vehicle according to claim 9**,** when it depends on claim 8, **characterised in that** the intermediate slat (7) connected by the pivot (8) to the drive means, of each directing element (4, 5) is arranged substantially perpendicular to the plane defined by the outlet opening (3) of the diffuser in all displacement positions between the first position and the second position.

11. The air diffuser for air conditioning a vehicle according to any of claims 9 or 10, **characterised in that** the directing elements (4, 5) define an air passage channel having a constant section along said directing elements (4, 5).

12. The air diffuser for air conditioning a vehicle according to claim 8, **characterised in that** the drive means comprise a lever (10) located close to the diffuser outlet (3), where the lever (10) is engaged with a gearbox that comprises at least one gear wheel (12), and where the gearbox is engaged with cams (11) connected respectively to the pivots (8) of the slats (7) of the intermediate sections of the respective directing elements (4, 5), the cams (11) being configured to displace, in a manner equidistant from each other in all displacement positions between the first position and the second position, the intermediate section of the directing elements (4, 5) towards one wall (21) or the other wall (22) of the casing (1) upon operation of the lever (10).

13. The air diffuser for air conditioning a vehicle according to any of the preceding claims, **characterised in that** it comprises at least one fin (13) inside the casing (1) configured to direct the air flow along a second directing plane perpendicular to the first directing plane.

14. The air diffuser for air conditioning a vehicle according to claim 13, **characterised in that** the fin (13) is located in correspondence with the intermediate section of the directing elements (4, 5), or in correspondence with a section of the directing elements (4, 5) arranged close to the air inlet (2) in the diffuser.

## Patentansprüche

1. Luftverteiler für eine Klimatisierung eines Fahrzeugs, der Verteiler umfassend ein Gehäuse (1), das einen Kanal für den Durchgang von Luft von einem Einlass (2) zu einem Auslass (3) des Verteilers definiert, wobei der Verteiler konfiguriert ist, sodass die Luft von dem Einlass (2) zu dem Auslass (3) geleitet wird und angepasst ist, um als ein Luftstrom von dem Verteilerauslass (3) zu dem Innenraum einer Fahrzeugkabine hin projiziert zu werden, wobei das Gehäuse (1) zwei gegenüberliegende Wände (21,22) umfasst, die eine Erweiterung und eine nachfolgende Verengung des Luftdurchgangskanals definieren, und wobei der Verteiler zwei Leitelemente (4, 5) innerhalb des Gehäuses (1) umfasst, wobei die Elemente (4, 5) konfiguriert sind, um den Durchgang von Luft durch den Verteilerinnenraum zu begrenzen, wobei jedes der Leitelemente (4, 5) angrenzend an eine jeweilige gegenüberliegende Wand (21, 22) des Gehäuses (1) angeordnet ist, wobei die Leitelemente (4, 5) über Antriebsmittel zwischen einer ersten Position, in der der Luftstrom entlang einer ersten Leitebene in eine erste Richtung geleitet wird, und einer zweiten Position verschoben werden können, in der der Luftstrom entlang der ersten Leitebene in eine zweite Richtung, entgegengesetzt zu der ersten Richtung, geleitet wird, wobei jedes Leitelement (4, 5) eine Vielzahl von Lamellen (7) umfasst, die mechanisch miteinander verknüpft und aufeinanderfolgend in Bezug auf die angrenzenden Lamellen (7) des jeweiligen Leitelements (4, 5) angeordnet sind, sodass die Betätigung der Antriebsmittel bewirkt, dass die Lamellen (7), die in einem Zwischenabschnitt jedes Leitelements (4, 5) angeordnet sind, zu einer Wand (21) oder der anderen Wand (22) des Gehäuses (1) hin verschoben werden, wobei der Luftstrom an dem Verteilerauslass (3) in eine Richtung umgeleitet wird, die der Verschiebungsrichtung der Lamellen (7), die in dem Zwischenabschnitt jedes Leitelements (4, 5) angeordnet sind, entgegengesetzt ist, wobei der Luftverteiler **dadurch gekennzeichnet ist, dass** jedes Leitelement (4, 5) eine flexible Folie (6) umfasst, wobei Innenflächen der flexiblen Folien (6) den Luftdurchgangskanal des Verteilers begrenzen und jede Lamelle (7) an einer Außenfläche der jeweiligen flexiblen Folie (6) angehaftet ist und auf der Seite der jeweiligen flexiblen Folie (6), die zu der der jeweiligen flexiblen Folie (6) am nächsten liegenden Wand (21, 22) hin ausgerichtet ist, angeordnet ist.

2. Luftverteiler für die Klimatisierung eines Fahrzeugs nach Anspruch 1, **dadurch gekennzeichnet, dass** jede der Vielzahl von Lamellen (7) an ihrer jeweiligen flexiblen Folie (6) getrennt von der angrenzenden Lamelle (7) angehaftet ist, sodass eine relative rotierende Bewegung zwischen aufeinanderfolgenden Lamellen (7) ermöglicht wird.

3. Luftverteiler für die Klimatisierung eines Fahrzeugs nach Anspruch 2, **dadurch gekennzeichnet, dass** der Trennabstand derart definiert ist, dass ein Kontakt zwischen aufeinanderfolgenden Lamellen (7) im Falle einer relativen Rotation zwischen aufeinanderfolgenden Lamellen (7) eines zuvor bestimmten Werts erfolgt, wobei die relative Rotation zwischen aufeinanderfolgenden Lamellen (7) eingegrenzt wird.

4. Luftverteiler für die Klimatisierung eines Fahrzeugs nach einem der vorstehenden Ansprüche, **dadurch gekennzeichnet, dass** eines der Leitelemente (5) mit einer Wand (22) in Kontakt tritt, wenn sich die Leitelemente (4, 5) in der ersten Position befinden, und **dass** eines der Leitelemente (4) mit der anderen Wand (21) in Kontakt tritt, wenn sich die Leitelemente (4, 5) in der zweiten Position befinden.

5. Luftverteiler für die Klimatisierung eines Fahrzeugs nach einem der vorstehenden Ansprüche, **dadurch gekennzeichnet, dass** unter der Vielzahl von Lamellen (7) jedes Leitelement (4, 5) eine erste Endlamelle (71), die nahe dem Verteilerauslass (3) angeordnet ist, umfasst, wobei jede der ersten Endlamellen (71) einen jeweiligen Drehzapfen (8) umfasst, der mit zwei festen Punkten an dem Verteilerauslass (3) verknüpft ist.

6. Luftverteiler für die Klimatisierung eines Fahrzeugs nach einem der vorstehenden Ansprüche, **dadurch gekennzeichnet, dass** unter der Vielzahl von Lamellen (7) jedes Leitelement (4, 5) zweite Endlamellen (72), die sich nahe dem Verteilereinlass (2) befinden, umfasst, wobei jede der zweiten Endlamellen (72) jeweilige Drehzapfen (8) umfasst, die in eine Führung (9) eingesetzt sind, die konfiguriert ist, um den Drehzapfen (8) zu ermöglichen, nur innerhalb der Führung (9) verschoben zu werden.

7. Luftverteiler für die Klimatisierung eines Fahrzeugs nach Anspruch 6, **dadurch gekennzeichnet, dass** jede Führung (9) eine Längsgeometrie umfasst, die sich entlang einer Richtung senkrecht zu der Ebene, die durch die Austrittsöffnung (3) des Verteilers definiert wird, derart erstreckt, dass die Führungen (9) eine Bewegung der jeweiligen zweiten Endlamellen (72) entlang einer Längsverschiebung zu der Austrittsöffnung (3) des Verteilers hin oder von dieser weg definieren, und wobei jede Führung (9) eine Trichtergeometrie an ihrem der Austrittsöffnung (3) am nächsten liegenden Ende derart umfasst, dass jede Lamelle (72) der zweiten Endlamellen (72), die dem Zwischenabschnitt ihres jeweiligen Leitelements (4, 5) am nächsten liegt, zusätzlich zu einer Wand (21) oder der anderen Wand (22) des Gehäuses (1) hin verschoben wird.

8. Luftverteiler für die Klimatisierung eines Fahrzeugs nach einem der vorstehenden Ansprüche, **dadurch gekennzeichnet, dass** unter der Vielzahl von Lamellen (7), die in dem Zwischenabschnitt ihres jeweiligen Leitelemente (4, 5) angeordnet sind, eine dieser Zwischenlamellen (7) über einen Drehzapfen (8) mit den Antriebsmitteln verbunden ist.

9. Luftverteiler für die Klimatisierung eines Fahrzeugs nach einem der vorstehenden Ansprüche, **dadurch gekennzeichnet, dass** die Leitelemente (4, 5) während ihrer Verschiebung zwischen der ersten Position und der zweiten Position parallel zueinander bleiben.

10. Luftverteiler für die Klimatisierung eines Fahrzeugs nach Anspruch 9, wenn er von Anspruch 8 abhängt, **dadurch gekennzeichnet, dass** die Zwischenlamelle (7), die über den Drehzapfen (8) mit den Antriebsmitteln verbunden ist, jedes Leitelements (4, 5) im Wesentlichen senkrecht zu der Ebene, die über die Austrittsöffnung (3) des Verteilers definiert wird, in allen Verschiebungspositionen zwischen der ersten Position und der zweiten Position angeordnet ist.

11. Luftverteiler für die Klimatisierung eines Fahrzeugs nach einem der Ansprüche 9 oder 10, **dadurch gekennzeichnet, dass** die Leitelemente (4, 5) einen Luftdurchgangskanal, der einen konstanten Querschnitt entlang der Leitelemente (4, 5) aufweist, definieren.

12. Luftverteiler für die Klimatisierung eines Fahrzeugs nach Anspruch 8, **dadurch gekennzeichnet, dass** die Antriebsmittel einen Hebel (10), der sich nahe dem Verteilerauslass (3) befindet, umfassen, wobei der Hebel (10) mit einem Getriebe in Eingriff steht, das mindestens ein Getrieberad (12) umfasst, und wobei das Getriebe mit Nocken (11), die jeweils mit den Drehzapfen (8) der Lamellen (7) der Zwischenabschnitte der jeweiligen Leitelemente (4, 5) verbunden sind, in Eingriff steht, wobei die Nocken (11) konfiguriert sind, um, bei Betätigung des Hebels (10), den Zwischenabschnitt der Leitelemente (4, 5) in einer Weise, die in allen Verschiebungspositionen zwischen der ersten Position und der zweiten Position äquidistant zueinander ist, zu einer Wand (21) oder der anderen Wand (22) des Gehäuses (1) hin zu verschieben.

13. Luftverteiler für die Klimatisierung eines Fahrzeugs nach einem der vorstehenden Ansprüche, **dadurch gekennzeichnet, dass** er mindestens eine Rippe (13) innerhalb des Gehäuses (1) umfasst, die konfiguriert ist, um den Luftstrom entlang einer zweiten Leitebene senkrecht zu der ersten Leitebene zu leiten.

14. Luftverteiler für die Klimatisierung eines Fahrzeugs nach Anspruch 13, **dadurch gekennzeichnet, dass** sich die Rippe (13) in Übereinstimmung mit dem Zwischenabschnitt der Leitelemente (4, 5) oder in Übereinstimmung mit einem Abschnitt der Leitelemente (4, 5), der nahe dem Lufteinlass (2) in dem Diffusor angeordnet ist, befindet.

## Revendications

1. Diffuseur d'air pour la climatisation d'un véhicule, ledit diffuseur comprenant un boîtier (1) qui définit un canal pour le passage d'air à partir d'une entrée (2) vers une sortie (3) du diffuseur, dans lequel le diffuseur est conçu de sorte que l'air soit dirigé à partir de l'entrée (2) vers la sortie (3) et soit adapté pour être projeté comme un écoulement d'air à partir de la sortie (3) de diffuseur vers l'intérieur d'une cabine de véhicule, dans lequel le boîtier (1) comprend deux parois opposées (21, 22) qui définissent un élargissement et un rétrécissement ultérieur du canal de passage d'air et dans lequel le diffuseur comprend deux éléments (4, 5) de direction à l'intérieur du boîtier (1), lesdits éléments (4, 5) étant conçus pour délimiter le passage d'air à travers l'intérieur de diffuseur, chacun des éléments (4, 5) de direction étant disposé à côté d'une paroi opposée (21, 22) respective du boîtier (1), dans lequel lesdits éléments (4, 5) de direction peuvent être déplacés par un moyen d'entraînement entre une première position dans laquelle l'écoulement d'air est dirigé le long d'un premier plan de direction dans une première direction, et une seconde position dans laquelle l'écoulement d'air est dirigé le long dudit premier plan de direction dans une seconde direction, opposée à la première direction, dans lequel chaque élément (4, 5) de direction comprend une pluralité de lamelles (7) reliées mécaniquement les unes aux autres et disposées consécutivement par rapport aux lamelles (7) adjacentes de l'élément (4, 5) de direction respectif, de sorte que l'opération du moyen d'entraînement amène les lamelles (7) disposées dans une section intermédiaire de chaque élément (4, 5) de direction à se déplacer vers une paroi (21) ou l'autre paroi (22) du boîtier (1), redirigeant l'écoulement d'air au niveau de la sortie (3) de diffuseur dans une direction opposée à la direction de déplacement desdites lamelles (7) disposées dans la section intermédiaire de chaque élément (4, 5) de direction, le diffuseur d'air étant **caractérisé en ce que** chaque élément (4, 5) de direction comprend une feuille souple (6), dans lequel des faces internes des feuilles souples (6) délimitent le canal de passage d'air du diffuseur et chaque lamelle (7) est collée à une face externe de la feuille souple (6) respective et est disposée sur le côté de la feuille souple (6) respective orienté vers la paroi (21, 22) la plus proche de la feuille souple (6) respective.

2. Diffuseur d'air pour la climatisation d'un véhicule selon la revendication 1, **caractérisé en ce que** chacune de la pluralité de lamelles (7) est collée à sa feuille souple (6) respective séparée de la lamelle (7) adjacente, de sorte qu'un mouvement de rotation relative soit autorisé entre des lamelles (7) consécutives.

3. Diffuseur d'air pour la climatisation d'un véhicule selon la revendication 2, **caractérisé en ce que** la distance de séparation est définie de telle sorte qu'un contact se produise entre des lamelles (7) consécutives en cas de rotation relative entre des lamelles (7) consécutives d'une valeur prédéterminée, limitant la rotation relative entre des lamelles (7) consécutives.

4. Diffuseur d'air pour la climatisation d'un véhicule selon l'une quelconque des revendications précédentes, **caractérisé en ce que** l'un des éléments (5) de direction entre en contact avec une paroi (22), lorsque les éléments (4, 5) de direction sont situés dans la première position, et **en ce que** l'un des éléments (4) de direction entre en contact avec l'autre paroi (21), lorsque les éléments (4, 5) de direction sont situés dans la seconde position.

5. Diffuseur d'air pour la climatisation d'un véhicule selon l'une quelconque des revendications précédentes, **caractérisé en ce que,** parmi la pluralité de lamelles (7), chaque élément (4, 5) de direction comprend une première lamelle d'extrémité (71) disposée à proximité de la sortie (3) de diffuseur, dans lequel chacune desdites premières lamelles d'extrémité (71) comprend un pivot (8) respectif relié à deux points fixes au niveau de la sortie (3) de diffuseur.

6. Diffuseur d'air pour la climatisation d'un véhicule selon l'une quelconque des revendications précédentes, **caractérisé en ce que,** parmi la pluralité de lamelles (7), chaque élément (4, 5) de direction comprend des secondes lamelles d'extrémité (72) situées à proximité de l'entrée (2) de diffuseur, dans lequel chacune desdites secondes lamelles d'extrémité (72) comprend des pivots (8) respectifs qui sont insérés dans un guide (9) conçu pour permettre auxdits pivots (8) de se déplacer uniquement à l'intérieur dudit guide (9).

7. Diffuseur d'air pour la climatisation d'un véhicule selon la revendication 6, **caractérisé en ce que** chaque guide (9) comprend une géométrie longitudinale qui s'étend le long d'une direction perpendiculaire au plan défini par l'ouverture de sortie (3) du diffuseur, de sorte que lesdits guides (9) définissent un mouvement des secondes lamelles d'extrémité (72) respectives le long d'un déplacement longitudinal vers ou à l'écart de l'ouverture de sortie (3) du diffuseur, et dans lequel chaque guide (9) comprend une géométrie d'entonnoir au niveau de son extrémité la plus proche de l'ouverture de sortie (3), de sorte que chaque lamelle (72) des secondes lamelles d'extrémité (72) qui est la plus proche de la section intermédiaire de son élément (4, 5) de direction respectif se déplace en outre vers une paroi (21) ou l'autre paroi (22) du boîtier (1).

8. Diffuseur d'air pour la climatisation d'un véhicule selon l'une quelconque des revendications précédentes, **caractérisé en ce que,** parmi la pluralité de lamelles (7) disposées dans la section intermédiaire de son élément (4, 5) de direction respectif, l'une desdites lamelles (7) intermédiaires est reliée par un pivot (8) au moyen d'entraînement.

9. Diffuseur d'air pour la climatisation d'un véhicule selon l'une quelconque des revendications précédentes, **caractérisé en ce que** les éléments (4, 5) de direction restent parallèles l'un à l'autre pendant leur déplacement entre la première position et la seconde position.

10. Diffuseur d'air pour la climatisation d'un véhicule selon la revendication 9, lorsqu'elle dépend de la revendication 8, **caractérisé en ce que** la lamelle (7) intermédiaire reliée par le pivot (8) au moyen d'entraînement, de chaque élément (4, 5) de direction, est disposée sensiblement perpendiculairement au plan défini par l'ouverture de sortie (3) du diffuseur dans toutes les positions de déplacement entre la première position et la seconde position.

11. Diffuseur d'air pour la climatisation d'un véhicule selon l'une quelconque des revendications 9 ou 10, **caractérisé en ce que** les éléments (4, 5) de direction définissent un canal de passage d'air ayant une section constante le long desdits éléments (4, 5) de direction.

12. Diffuseur d'air pour la climatisation d'un véhicule selon la revendication 8, **caractérisé en ce que** le moyen d'entraînement comprend un levier (10) situé à proximité de la sortie (3) de diffuseur, dans lequel le levier (10) vient en prise avec une boîte d'engrenages qui comprend au moins une roue d'engrenage (12), et dans lequel la boîte d'engrenages vient en prise avec des cames (11) reliées respectivement aux pivots (8) des lamelles (7) des sections intermédiaires des éléments (4, 5) de direction respectifs, les cames (11) étant conçues pour déplacer, de manière équidistante les unes des autres dans toutes les positions de déplacement entre la première position et la seconde position, la section intermédiaire des éléments (4, 5) de direction vers une paroi (21) ou l'autre paroi (22) du boîtier (1) lors de l'opération du levier (10).

13. Diffuseur d'air pour la climatisation d'un véhicule selon l'une quelconque des revendications précédentes, **caractérisé en ce qu'il** comprend au moins une ailette (13) à l'intérieur du boîtier (1) conçue pour diriger l'écoulement d'air le long d'un second plan de direction perpendiculaire au premier plan de direction.

14. Diffuseur d'air pour la climatisation d'un véhicule selon la revendication 13, **caractérisé en ce que** l'ailette (13) est située en correspondance avec la section intermédiaire des éléments (4, 5) de direction, ou en correspondance avec une section des éléments (4, 5) de direction disposée à proximité de l'entrée (2) d'air dans le diffuseur.
